# EUROPÄISCHE PATENTSCHRIFT

(11) **EP 1 755 858 B1**
(45) Veröffentlichungstag und Bekanntmachung des Hinweises auf die Patenterteilung: **27.02.2008**
(21) Anmeldenummer: 05733262.9
(22) Anmeldetag: 21.04.2005
(51) Int. Cl.: B29C 45/66

(54) **SCHLIESSEINHEIT MIT DOPPELKURBELANTRIEB**
LOCKING UNIT WITH DOUBLE CRANK DRIVE
UNITE DE FERMETURE A ENTRAINEMENT A DOUBLE MANIVELLE

(30) Priorität: 29.05.2004 DE 102004026450
(43) Veröffentlichungstag der Anmeldung: 28.02.2007
(73) Patentinhaber: KraussMaffei Technologies GmbH, 80997 München (DE)
(72) Erfinder: WOHLRAB, Walter, 91781 Weissenburg (DE)
(74) Vertreter: Zollner, Richard
(86) Internationale Anmeldenummer: PCT/EP2005/004288
(87) Internationale Veröffentlichungsnummer: WO 2005/115718

(56) Entgegenhaltungen:
- GB-A- 1 309 763
- PATENT ABSTRACTS OF JAPAN Bd. 2003, Nr. 09, 3. September 2003 (2003-09-03) -& JP 2003 154566 A (MEIKI CO LTD), 27. Mai 2003 (2003-05-27)
- PATENT ABSTRACTS OF JAPAN Bd. 014, Nr. 081 (M-0935), 15. Februar 1990 (1990-02-15) & JP 01 295815 A (FANUC LTD), 29. November 1989 (1989-11-29)

## Beschreibung

Die Erfindung betrifft eine Schließeinheit mit Doppelkurbelantrieb gemäß dem Oberbegriff des Anspruchs 1.

Schließeinheiten für Pressen oder Spritzgießmaschinen sind allgemein bekannt. Bei Spritzgießmaschinen müssen in der Regel zwei Werkzeughälften zur Ausbildung einer Kavität mit einem großen Schließdruck zusammen gehalten werden, um eine plastifizierte Kunststoffschmelze ohne Austritt in die Kavität einspritzen zu können. Zu diesem Zweck werden die Werkzeugformen in der Regel an zwei Aufspannplatten einer Schließeinheit angeordnet, die relativ zueinander auf und zu bewegbar sind. Im geschlossenen Werkzeug wird eine Kunststoffschmelze zur Ausbildung eines Kunststoffproduktes in die Kavität eingebracht. Bei geöffnetem Werkzeug kann das so hergestellte Kunststoffprodukt nach dem Aushärten dann entnommen werden.

Im Stand der Technik ist dazu eine große Vielzahl von konstruktionstechnisch verschiedenen Schließeinheiten bekannt. Beispielsweise unterscheidet man zwischen einer 3-Platten-Schließeinheit und einer 2-Platten-Schließeinheit. Bei einer 2-Platten-Schließeinheit verwendet man in der Regel eine feste und eine bewegliche Aufspannplatte, die über Zugmittel miteinander verbunden sind. Meist über diese Zugmittel, z.B. Zugholme, kann dann eine Verfahrbewegung der beiden Aufspannplatten relativ zueinander erreicht und eine Schließkraft aufgebracht werden.

Bei 3-Platten-Schließeinheiten sind in der Regel eine feste Aufspannplatte sowie eine Abstützplatte vorgesehen. Eine bewegliche Aufspannplatte ist zwischen der festen Aufspannplatte und der Abstützplatte angeordnet und über einen Antrieb relativ zur festen Aufspannplatte hin und her bewegbar. Der Antrieb ist dabei in der Regel zwischen der beweglichen Aufspannplatte und der Abstützplatte angeordnet. Als Antriebsmöglichkeit sind hydraulische Schließeinrichtungen wie Hydraulikkolben oder Kniehebelsysteme bekannt, die auf vielfältige Weise hydraulisch oder elektrisch angetrieben werden können.

Bei Kniehebel- oder Pleuelsystemen ist der maximale Hub zwischen der beweglichen und der festen Aufspannplatte über die Kniehebelkonstruktion vorgegeben, so dass sich der Abstand zwischen der Abstützplatte einerseits und der beweglichen Aufspannplatte andererseits immer nur in einem definierten Wegbereich bewegen kann. Überdies kann die Schließkraft zumeist nur in einer Streck- oder Totpunktlage des Kniehebels aufgebracht werden.

Da zur Herstellung unterschiedlicher Teile zwischen der festen Aufspannplatte und der beweglichen Aufspannplatte verschiedene, insbesondere verschieden dicke Werkzeuge angeordnet werden, muss bei einer Kniehebel- oder Pleuelkonstruktion in der Regel auch ein Verstellmechanismus zur Einstellung auf ein Werkzeug - entweder für die feste Aufspannplatte oder für die Kombination aus beweglicher Aufspannplatte, Abstützplatte und Antrieb - vorgesehen werden. Mit dieser Einstellung kann man dann nicht nur den Abstand zwischen der festen Aufspannplatte und der beweglichen Aufspannplatte auf unterschiedliche Werkzeugdicken justieren, sondern auch einen Service- oder Wartungshub durchführen. Auch für diese Verstellung gibt es im Stand der Technik eine Vielzahl von konstruktive Lösungen.

Eine weitere Schließeinheit ist aus des JP-A-2003 154 566 bekannt, auf des der Oberbegriff von Anspruch 1 beruht.

Aufgabe der vorliegenden Erfindung ist es, eine weitere Schließeinheit anzugeben, die sich durch einen einfachen und robusten Aufbau und eine kostengünstige Ausführungsmöglichkeit auszeichnet. Der einfache und robuste Aufbau soll unter anderem durch eine geringe Zahl von Bauteilen unterstützt werden, was sich auch in einer kostengünstigen Montage auswirkt.

Diese Aufgabe wird durch eine Schließeinheit gelöst, wie sie im Anspruch 1 angegeben ist.

Dabei bedient man sich einer 3-Platten-Konstruktion, also umfassend eine zumindest beim Arbeitshub feste Werkzeugaufspannplatte und eine beim Arbeitshub bewegliche Werkzeugaufspannplatte, die sich über einen Öffnungs- und Schließmechanismus gegenüber der Abstützplatte abstützt.

Gemäß einem Grundgedanken der vorliegenden Erfindung ist der Öffnungs- und Schließmechanismus als Doppel-Kurbelantrieb mit zumindest einer Kurbelscheibe ausgebildet, welche über zumindest ein Pleuel erster Art mit der Abstützplatte und über ein Pleuel zweiter Art mit der beweglichen Platte verbunden ist. Dabei ist zumindest ein Pleuel einer Art exzentrisch an der drehangetriebenen Kurbelscheibe angelenkt. Der Drehantrieb für die Kurbelscheibe wird mittels eines eigenen Antriebs realisiert.

In der Regel sind beide Pleuel, also sowohl das oder die Pleuel erster wie auch das oder die Pleuel zweiter Art exzentrisch an der Kurbelscheibe angelenkt, vorzugsweise mit gleicher Exzentrizität und diametral gegenüberliegend. Auf diese Art und Weise ist ein Doppelkurbelantrieb realisiert, der gegenüber einem einfachen Kurbelantrieb den Vorteil einer größeren Hubhöhe, bei gleichem Drehmomenteintrag besitzt.

Aufgrund der gerade beschriebenen Konstruktion, insbesondere bei einer exzentrischen Anlenkung der Pleuel beider Arten, kommt es beim Betrieb des Kurbelantriebs sowohl zu einer Relativbewegung zwischen Kurbelantrieb und Abstützplatte wie auch zwischen Kurbelantrieb und beweglicher Platte. Ist die Abstützplatte beim normalen Arbeitsbetrieb festgesetzt, so verfährt der Kurbeltrieb in gleicher Weise wie die bewegliche Platte beim Öffnen und Schließen hin und her.

Natürlich muss die Kurbelscheibe nicht tatsächlich als Scheibe ausgebildet sein. Wichtig ist vielmehr eine exzentrische Anlenkung zumindest eines Pleuels über einen Exzenterbolzen, was auch durch eine nicht vollständig scheibenartig ausgebildete Kurbelscheibe (beispielsweise einen Kurbelhebel, etc.) erzeugt werden kann.

Im Folgenden wird davon ausgegangen, dass die Pleuel sowohl erster wie auch zweiter Art jeweils mit gleicher Exzentrizität an der Kurbelscheibe angelenkt sind. Die Konstruktion der Pleuel sowie die Anordnung an der Kurbelscheibe soll gemäß einer bevorzugten Ausführungsform so erfolgen, dass beim Betrieb der Kurbelscheibe möglichst eine Winkelverschwenkung von bis zu 120° gegenüber der Schließstellung der beweglichen Aufspannplatte möglich ist. Mit bestimmten Konstruktionen können natürlich auch Verdrehungen der Kurbelscheibe um 180° erreicht werden. Dies würde dem konstruktiv maximal möglichen Hub entsprechen. Bei einer Verdrehung von 120° gegenüber dem Totpunkt in der Verschließlage beträgt der Öffnungshub etwa das 1,5-fache des Exzenterdurchmessers. Bei einer Verdrehung um 180° wurde der max. mögliche Öffungs- und Schließhub während des Arbeitsbetriebs dem 2-fachen Exzenterdurchmessers entsprechen (ausgehend von einer Anlenkung der beiden Pleuel erster und zweiter Art mit gleicher Exzentrizität).

Um die großen Schließkräfte besser aufnehmen zu können und die Krafteinleitung in die Konstruktionsteile besser zu verteilen, sind gemäß einer bevorzugten Ausführungsform zwei Kurbelscheiben parallel nebeneinander angeordnet und zwar verdrehtfest zueinander. Beide Kurbelscheiben sind jeweils über ein Pleuel erster Art mit der Abstützplatte und über ein Pleuel zweiter Art mit der beweglichen Aufspannplatte verbunden. Die Pleuel erster bzw. zweiter Art einer jeweils zugehörigen Kurbelscheibe sind vorzugsweise in einer Radialebene fluchtend angeordnet. Damit ist jedoch eine Verdrehung der Kurbelscheibe um 180° ausgeschlossen. Soll die Kurbelscheibe um den max. Hub um 180° gedreht werden können, so müssten die Pleuel bezüglich der Radialebene der Kurbelscheibe versetzt angeordnet sein. Eine radial fluchtende Anordnung hat jedoch den Vorteil, dass keine Scher- oder Torsionskräfte in Richtung der Drehachse auftreten.

Überdies ist der Kurbelantrieb bei einer Verwendung von zwei Kurbelscheiben bezüglich einer Mittelachse vorzugsweise symmetrisch ausgebildet, so dass die Krafteinleitung sowohl an der Abstützplatte wie auch an der beweglichen Aufspannplatte möglichst gleichmäßig erfolgt.

Gemäß einer weiteren vorzugsweisen Ausführungsform ist zwischen den beiden Kurbelscheiben ein Zahnrad angeordnet, welches fest mit den beiden Kurbelscheiben verbunden ist und mit dem Antriebsmittel in Eingriff steht. Als Antriebsmittel kann ein regelbarer Elektromotor verwendet werden, der an seiner Abtriebswelle ein Ritzel oder eine Antriebsschnecke aufweist. Durch das Zahnrad und das Ritzel oder die Antriebsschnecke ist ein Untersetzungsgetriebe gebildet. Durch diese Untersetzung wird das für den Verriegelungsvorgang erforderliche, hohe Drehmoment erzeugt.

Natürlich ist auch eine Vielzahl anderer Antriebe für die Kurbelscheibe oder die Kurbelscheiben möglich. Entscheidend ist lediglich; dass die Kurbelscheibe mit dem notwendigen Moment angetrieben werden kann.

Beispielsweise ist es alternativ möglich, zwischen oder an den beiden Kurbelscheiben oder an einer Kurbelscheibe einen weiteren Exzenterbolzen anzubringen, an dem ein Hydraulikkolben angreift, der die Kurbelscheibe bei seinem linearen Betrieb dreht. Allerdings wird man sich in der Regel zu dem Einsatz eines Elektromotors entschließen, da man einen Hydraulikantrieb auch unmittelbar mit der Platte kombinieren könnte.

Möglich ist es auch die Kurbelscheibe über einen elektrischen Direktantrieb zu betreiben. Allerdings könnten sie derzeit noch die Drehmomentbeschränkungen solcher Direktmotore bzw. deren Kosten als Einsatzhindernis entpuppen. Theoretisch wäre es jedoch möglich, zwischen den beiden Kurbelscheiben einen elektrischen Direktantrieb mit einem Stator und einem mit der oder den Kurbelscheiben verbundenen Rotor vorzusehen, so dass keinerlei Getriebe mehr verwendet werden muss.

Weiter ist es möglich, mehrere Elektromotore zu verwenden, die beispielsweise an einem Zahnrad - wie oben beschrieben - angreifen. Auf diese Weise ist es möglich, einerseits die Belastungen auf das Zahnrad gleichmäßiger über dessen Umfang zu verteilen, andererseits die Motore kleiner zu wählen. Dies ist insbesondere dann von Interesse, wenn die Kosten für Motore überproportional zu den Drehmomenten ansteigen. In diesem Fall wäre es evtl. kostengünstiger zwei oder drei Elektromotore anstatt eines einzigen großen Motors zu verwenden. Natürlich hätte dies auch Auswirkungen auf die Konstruktion.

Gemäß einer bevorzugten Ausführungsform ist die bewegliche Aufspannplatte auf einer, vorzugsweise zwei oder mehr Führungsschienen zum linearen hin und her verfahren geführt.

Da sich auch der Kurbelantrieb bei fester Abstützplatte bei der Öffnungs- und Schließbewegung hin und her bewegt, kann dieser zusammen mit der gesamten Antriebseinrichtung über einen gemeinsamen Lagerbock ebenfalls auf zumindest einer Führungsschiene hin und her bewegbar angeordnet sein. Natürlich könnten die Führungsschienen für die bewegliche Aufspannplatte sowie den Lagerbock des Kurbeltriebs die gleichen sein.

Als Zugmittel zwischen der Abstützplatte und der festen Aufspannplatte können zumindest zwei, vorzugsweise vier Zugholme verwendet werden. Alternativ könnte eine Abstützung auch durch einen entsprechend ausgebildeten Maschinenrahmen erreicht werden, wobei entsprechend ausgebildete, außen an der festen Aufspannplatte und der Abstützplatte angeordnete Abstützelemente vorgesehen werden müssten. Die Art der Zugmittel ist für die vorliegende Erfindung jedoch nicht entscheidend.

Da der Doppelkurbelantrieb immer nur einen begrenzten Hub zulässt und die Schließstellung in einem Todpunkt erreicht werden soll, sollte in den meisten Fällen eine separate Verstellmöglichkeit für der Verwendung unterschiedlicher Werkzeuge vorgesehen werden. Dies würde sich jedoch dann erübrigen, wenn der Öffnungs- und Schließhub auch für Service- und Wartungszwecke ausreichend groß wäre. Als Beispiel könnten Maschinen zur Herstellung von optischen Datenträgern genannt werden.

Auch die Verstelleinrichtungen für den Service- und Wartungshub können auf vielfältige Weise ausgeführt werden. Einerseits ist es möglich, die an sich beim Arbeitsbetrieb feste Aufspannplatte verstellbar auszubilden. Andererseits ist es möglich, die Kombination aus Abstützplatte, Kurbeltrieb und beweglicher Aufspannplatte mit einer solchen Verstellung auszustatten.

Gemäß einer bevorzugten Ausführungsform der vorliegenden Erfindung sind die Zugholme an deren abstützplattenseitigem Ende mit einem Gewinde ausgestattet. Für jeden Zugholm ist eine Spindelmutter in der Abstützplatte drehbar jedoch axial fest angeordnet, welche mit dem zughörigen Zugholmgewinde zusammenwirkt. Durch gemeinsames Drehen aller Spindelmuttern, beispielsweise mit einem gemeinsamen Antrieb kann eine Einstellung des Abstandes zwischen der festen Aufspannplatte einerseits und der Kombination aus beweglicher Aufspannplatte, Abstützplatte und Kurbeltrieb andererseits erreicht werden. Natürlich könnte die Spindelmutter/Zugholm-Verstellung auch auf Seiten der festen Aufspannplatte angeordnet werden. Auch könnte man eine Ausführungsform realisieren, bei der die Abstützplatte fest mit einem Maschinenrahmen verbunden ist, die feste Aufspannplatte, jedoch nur beim Arbeitsbetrieb fest ist, beim Service- und Wartungsbetrieb jedoch verstellt werden kann.

Eine wichtige Voraussetzung für den langfristigen, unproblematischen Betrieb der Schließeinheit ist die Schmierung der Gelenkpunkte sowie eines vorhandenen Getriebes. Bei der vorliegenden Erfindung sind die Pleuel durch Bolzen an dem jeweiligen Konstruktionsteil, also der Abstützplatte, den Kurbelscheiben oder der beweglichen Platten gehalten. Gemäß einer nicht beanspruchten Ausführungsform ist bei jedem Bolzen zwischen der Bolzenoberfläche und in der Pleuelbohrung ein Schmierraum in Form eines Ringspaltes vorgesehen, wobei für jeden Ringspalt ein Schmiermittelzulauf und ein Schmiermittelablauf angeordnet sind.

Die zwei Ringspalte eines Pleuels sind miteinander über einen Strömungskanal verbunden. Damit kann für jeden Pleuel eine Schmierung in der Weise erfolgen, dass ein Schmiermittelzulauf zu einem ersten Ringspalt erfolgt, das Schmiermittel von diesem einen Ringspalt über den Strömungskanal zum zweiten Ringspalt geführt wird und dort über einen Schmiermittelabfluss abgeführt wird. Vorzugsweise mündet der Schmiermittelabfluss in ein Gehäuse für den Kurbelantrieb, in dem auch die Kurbelscheiben gelagert und das Zahnrad aufgenommen sind. Auf diese Weise wird auch noch das Getriebe aus Kurbelzahnrad und Schneckenantrieb oder Ritzel geschmiert. Aus dem Getriebegehäuse kann das Schmiermittel dann über einen Ablauf mit einer Pumpe wieder abgeführt und den Pleuel erneut zugeführt werden.

Der Ringraum sollte gegenüber der Außenumgebung möglichst abgeschlossen sein. Mit dieser Art der Schmierung ist die Realisierung eines gekapselten Antriebssatzes mit leckfreien Gelenken möglich, der auch die Reinraumtauglichkeit für die Schließeinheit gewährleistet.

Bei einer geeigneten Konstruktion kann der Antriebssatz mit einer geringe Zahl von Bauteilen auskommen (beispielsweise können alle Pleuel gleich ausgeführt werden), welche auch robust ausgeführt werden können.

Die vorliegende Erfindung nachfolgend anhand eines Ausführungsbeispiels und mit Bezug auf die beiliegenden Zeichnungen näher erläutert. Die Zeichnungen zeigen in:
- **Fig. 1:**: eine schematische Darstellung einer Seitenansicht einer erfindungsgemäßen Schließeinheit,
- **Fig. 2:**: eine schematische Draufsicht der erfindungsgemäßen Schließeinheit aus Fig. 1,
- **Fig. 3:**: eine schematische Frontansicht in Richtung der Abstützplatte der erfindungsgemäßen Schließeinheit aus Fig. 1,
- **Fig. 4:**: eine schematische Seitenschnittansicht gemäß Schnitt D-D der erfindungsgemäßen Schließeinheit aus Fig. 1,
- **Fig. 5:**: eine schematische Schnittansicht gemäß Schnitt A-A der erfindungsgemäßen Schließeinheit aus Fig. 1,
- **Fig. 6:**: eine schematische Schnittdarstellung gemäß Schnitt D-D der erfindungsgemäßen Schließeinheit aus Fig. 1,
- **Fig. 7:**: eine schematische Perspektivansicht der erfindungsgemäßen Schließeinheit aus Fig. 1 und
- **Fig. 8:**: eine schematische Detailschnittdarstellung, welche die Schmierung für ein Pleuel darstellt, jedoch nicht Teil der vorliegenden Erfindung ist.

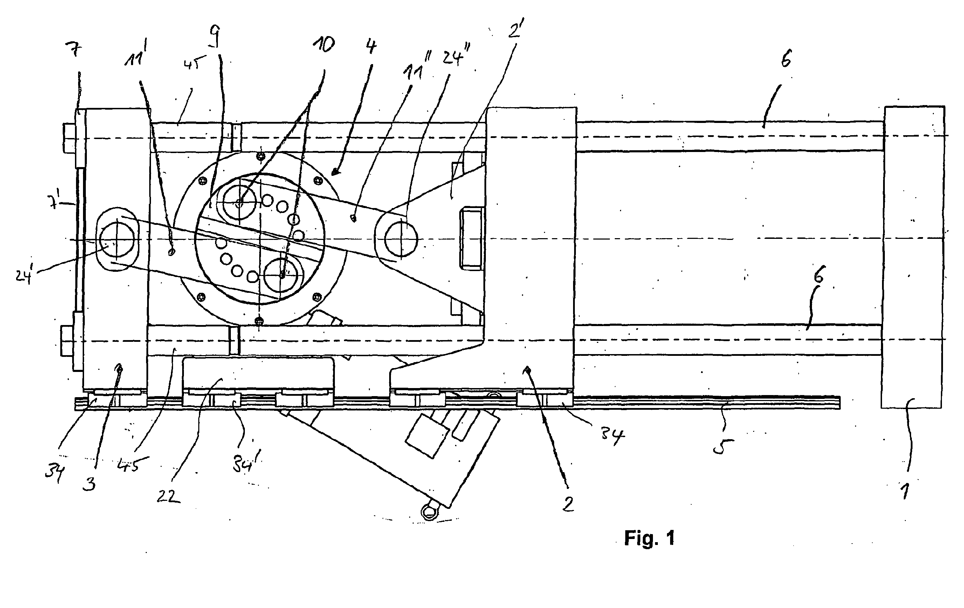

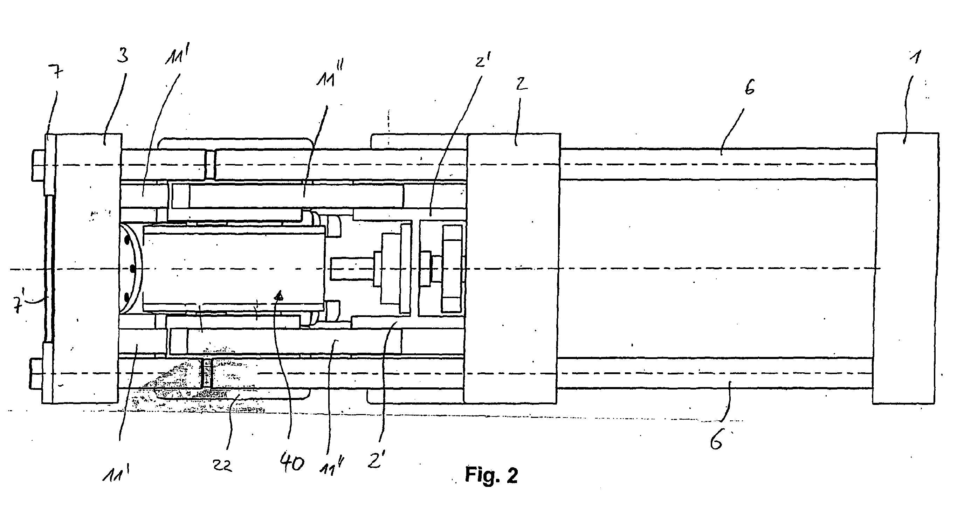

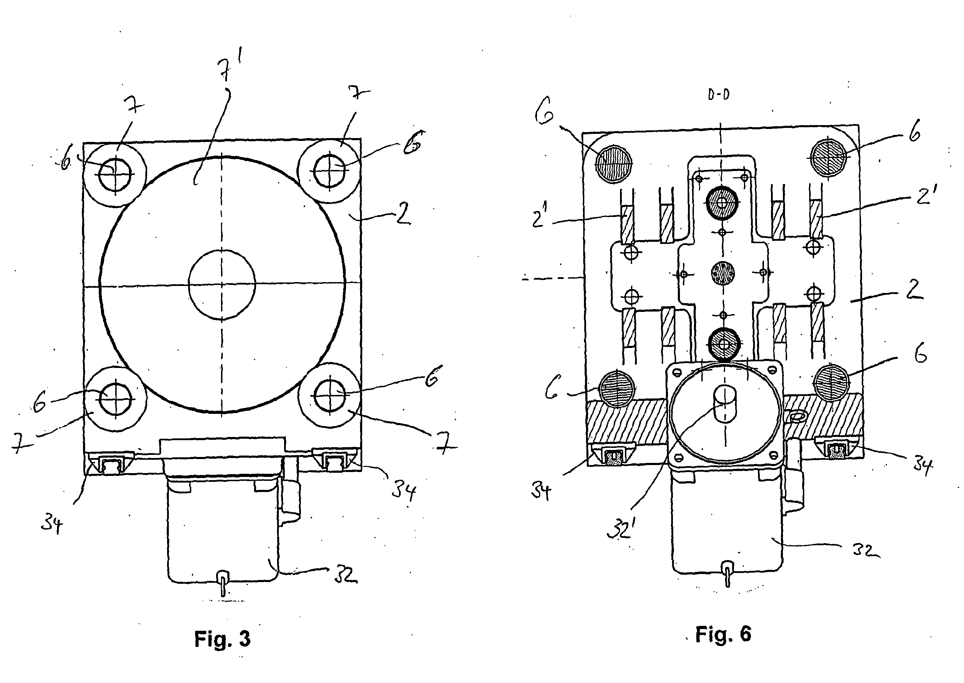

Die vorliegende Erfindung wird nachfolgend anhand eines Ausführungsbeispiels dargestellt, welches in den Figuren 1 bis 7 gezeigt ist. Dieses Ausführungsbeispiel soll jedoch in keiner Weise schutzumfangsbeschränkend verstanden werden, da es nur eine Möglichkeit ist, die vorliegende Erfindung zu realisieren.

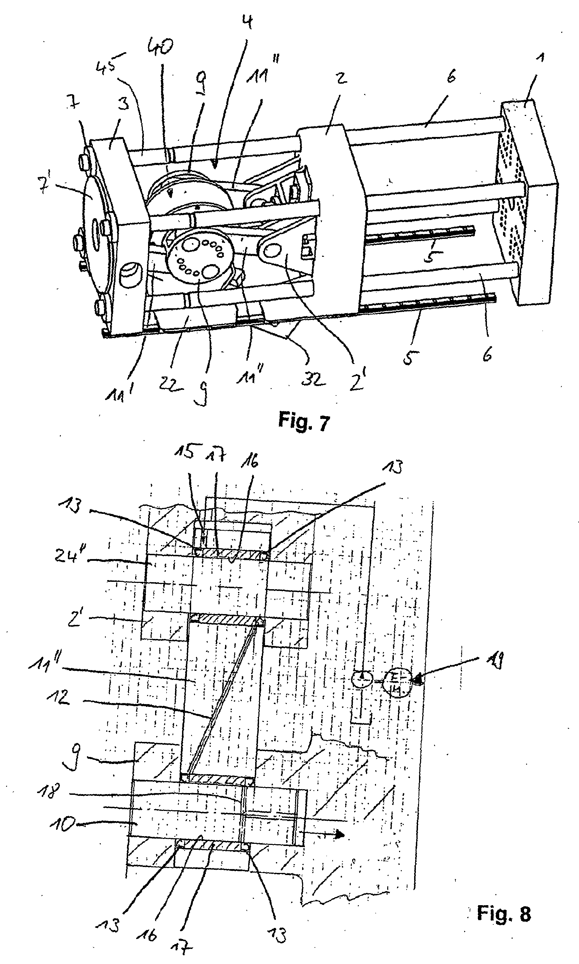

In der perspektivischen Darstellung der Fig. 7 ist eine feste Aufspannplatte 1 dargestellt, die über vier Zugholme 6 mit einer Abstützplatte 3 verbunden ist. Die Zugholme 6 sind fest mit der festen Aufspannplatte 1 verbunden und in jeweils einer zugeordneten Spindelmutter 7 (nachfolgend noch näher beschrieben) der Abstützplatte 3 aufgenommen.

In Fig. 7 nicht dargestellt ist, dass die feste Aufspannplatte 1 auf einem Maschinenrahmen abgestützt und mit diesem verbunden ist. Auf dem Maschinenrahmen sind gleichfalls zwei parallel zueinander verlaufende Führungsschienen 5 befestigt, auf denen die Einheit aus Abstützplatte 3, einer beweglichen Aufspannplatte 2 und einem Kurbeltrieb 4 angeordnet ist. Wie später noch beschrieben wird, sind alle vorgenannten Einheiten über Schlitten 34, 34' linear beweglich auf den Führungsschienen 5 angeordnet.

Die bewegliche Aufspannplatte 2 weist vier Bohrungen auf, durch die die Zugholme 6 funktionslos geführt sind.

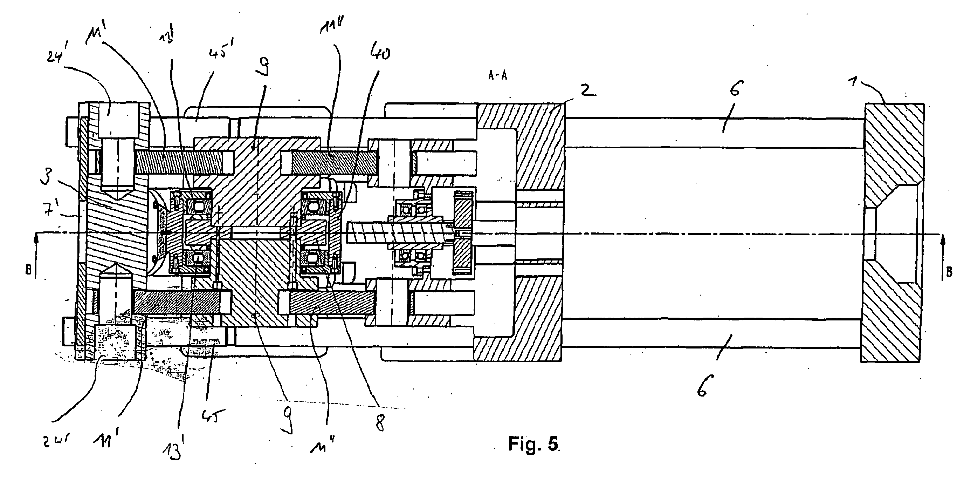

Der Kurbeltrieb 4 stellt die Öffnungs- und Schließeinrichtung für die Schließeinheit dar und umfasst zwei parallel (vergleiche Symmetrielinie B-B in Fig. 5) angeordnete, spiegelsymetrisch ausgebildete Kurbelscheiben 9, die drehbar in einem Gehäuse 40 gelagert sind.

Dabei weist, wie aus Fig. 5 ersichtlich, jede Kurbelscheibe 9 einen inneren Bereich mit reduziertem Durchmesser auf, der über ein Kugellager 13' drehbar in dem Gehäuse 40 gelagert ist.

Zwischen den beiden Kurbelscheiben 9 ist ein Zahnrad 8 koaxial angeordnet. Die beiden Kurbelscheiben 9 sowie das Zahnrad 8 sind über eine Anzahl von Schrauben miteinander fest verbunden und bilden eine Einheit. Wie ebenfalls in Fig. 5 zu erkennen ist, umgibt das Gehäuse 940 die beiden Kugellager 13', das Zahnrad 8 sowie die beiden inneren Bereiche der Kurbelscheiben 9.

In ihren axial äußeren Bereichen weisen die Kurbelscheiben 9 jeweils zwei diametral gegenüberliegende und symmetrisch ausgebildete Nutschlitze auf, in denen, wie nachfolgend noch erläutert wird, Pleuel 11' und 11" aufgenommen sind.

Jede Kurbelscheibe 9 ist über ein Pleuel erster Art 11' mit der Abstützplatte 3 verbunden. Jeder Pleuel 11' weist an seinen beiden Enden zwei Bohrungen auf. In einer ersten Bohrung sind im zusammengebauten Zustand Bolzen 24' (vergleiche Fig. 1) eingeführt, so dass die Pleuel 11' an der Abstützplatte 3 schwenkbar um den Bolzen 24' angelenkt und gehalten sind.

Auf der anderen Seite sind Bolzen 10 in die Kurbelscheiben 9 und durch die zweite Bohrung der Pleuel 11' eingeführt, und zwar derart, dass sich die Pleuel 11' um diese Bolzen 10 in den Nutschlitzen verschwenken lassen. Dabei können bei einer Drehung der Kurbelscheiben 9 die Pleuel 11' zumindest zum Teil in den Nutschlitzen aufgenommen werden.

Auf gleiche Weise wie die Pleuel 11' die Kurbelscheiben 9 mit der Abstützplatte 3 verbinden, verbinden die Pleuel zweiter Art 11" die beiden Kurbelscheiben 9 mit der beweglichen Aufspannplatte 2. Wiederum sind die Pleuel 11" an Bolzen 10, die in den beiden Kurbelscheiben 9 vorgesehen sind, verschwenkbar in den Nutschlitzen gehalten. Die jeweils anderen Enden der Pleuel 11" sind in einem Lager- und Befestigungsbock 2' der Aufspannplatte 2 mittels Bolzen 24" verschwenkbar gehalten. Zur Reduzierung der Bauteile sind vorzugsweise alle Pleuel 11' und 11" identisch ausgebildet. Gleiches kann für die Bolzen 10, 24' und 24" gelten.

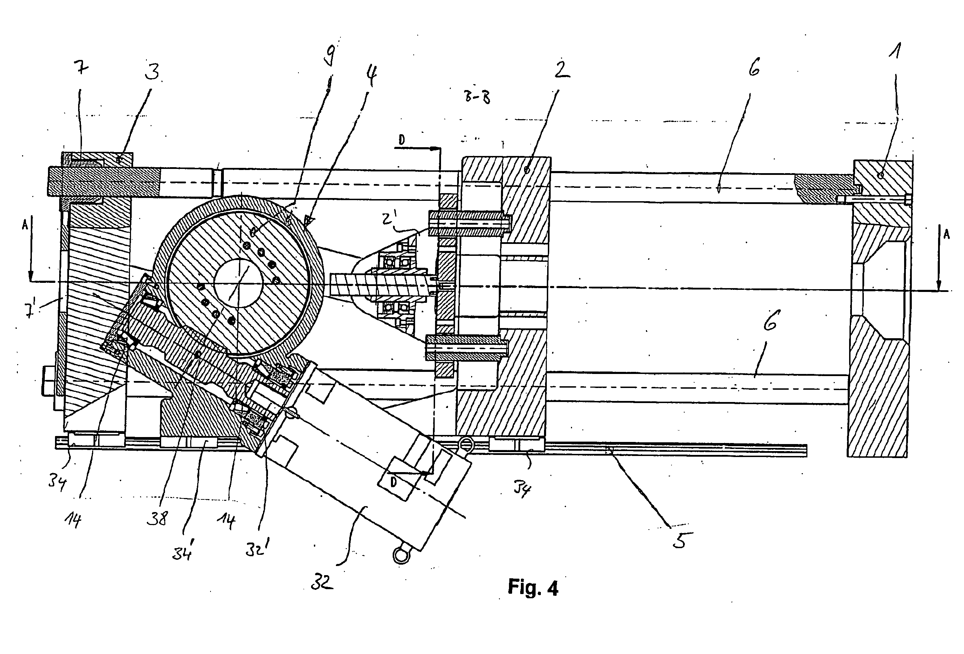

Die Angriffspunkte der Pleuel 11' sowie der Pleuel 11" an der Abstützplatte 3 bzw. der Aufspannplatte 2 sind bezüglich der Zentrallinie (Linie A-A in Fig. 4) jeweils mittig gewählt. Dadurch ergibt sich eine möglichst zentrale Beaufschlagung der Kräfte auf die jeweiligen Konstruktionselemente. Die teilweise Aufnahme der Pleuel 11' und 11' in den Nutschlitzen ist beispielsweise aus Fig. 7 ersichtlich.

Der Kurbeltrieb 4 wird vorliegend von einem Elektromotor 32 angetrieben, dessen Gehäuse integral mit dem Gehäuse 40 des Kurbeltriebs 4 ausgebildet. Eine Abtriebswelle des Motors 32 ist vorliegend mit einer Antriebsschnecke 38 verbunden, welche über zwei Lager 14 in dem Gehäuse 40 axial abgestützt gehalten ist. Bei einem rotatorischen Antrieb der Schnecke 38 kämmt diese mit dem Zahnrad 8 und verdreht dadurch - unter Ausbildung eines Untersetzungsgetriebes - die beiden Kurbelscheiben 9.

Die beiden Bolzen 10, welche die Pleuel 11' und 11" einer Kurbelscheibe schwenkbar halten, sind bezüglich der Rotationsachse diametral zueinander angeordnet. Die Schließlage der Schließeinheit ist dann erreicht, wenn die beiden Bolzen sich in ihren seitlichen Totpunkten befinden. Gegenüber dieser Todlage lässt die vorliegende Konstruktion eine Verdrehung um etwa 120° zu. Dies führt zu einem maximal möglichen Hub von etwa dem 1,5-fachen des Abstandes der beiden Bolzen 10 einer Kurbelscheibe 9.

Das gemeinsame Gehäuse 40 des Kurbeltriebs 4 und des Motors 32 weist einen Lagerbock 42 auf, der ebenfalls auf den Schienen 5 verfahrbar ist.

Wie weiter oben bereits erläutert, lässt der Doppelkurbeltrieb einen definierten Hub zu. Soll ein Werkzeug mit einer anderen Dicke in die Schließeinheit eingebaut werden, so muss der Abstand zwischen der festen Aufspannplatte 1 und der beweglichen Aufspannplatte 2 in der Geschlossenstellung verändert werden. Zu diesem Zweck sind die Zugholme 6 an ihren abstützplattenseitigen Enden mit Gewinden 45 versehen, die mit jeweils einer Gewindemutter 7 zusammenwirken, welche axial fest, jedoch rotatorisch beweglich, in der Abstützplatte 3 aufgenommen sind. Über ein zentrales Zahnrad 7' können diese Spindelmuttern 7, die außenseitig eine Verzahnung aufweisen, gemeinsam verdreht werden. Je nach Verdrehung führt dies aufgrund des Zusammenwirkens mit den Gewinden 45 der Zugholme 6 zu einer Verschiebung der gesamten Einheit aus Abstützplatte 3, Öffnungs- und Schließeinheit 4 sowie beweglicher Aufspannplatte 2 in Schließ- oder Öffnungsrichtung.

Nachfolgend soll die Funktionsweise der Schließeinheit mit dem soeben beschriebenen Doppelkurbelantrieb erläutert werden:
In keiner der Figuren ist ein Werkzeug an der festen Aufspannplatte 1 sowie der beweglichen Aufspannplatte 2 dargestellt. Ein solches Werkzeug wird für den Betrieb an diesen Aufspannplatten 1, 2 befestigt. Je nach Werkzeug wird dazu über das Zahnrad 7' und die Spindelmuttern 7 der Abstand für die Schließstellung zwischen der festen Aufspannplatte 1 und der beweglichen Aufspannplatte 2 eingestellt. Dabei werden die Abstützplatte 3, der Kurbeltrieb 4 sowie die bewegliche Aufspannplatte 2 entsprechend verstellt. Diese Verstellung kann auch beim Service oder bei der Wartung vorgenommen werden.

Beim Arbeitsbetrieb des Schließeinheit bleibt die Abstützplatte 3 festgestellt und es wird die bewegliche Aufspannplatte 2 durch alternierenden Betrieb des Motors 32 hin und her bewegt.

In allen Figuren ist die bewegliche Platte 2 in ihrer Offenstellung gezeigt. Dabei sind die Kurbelscheiben 9 um etwa 120° gegenüber ihrer Totpunktlage verdreht. Soll nun die bewegliche Aufspannplatte 2 geschlossen werden, so wird der Motor 32 entsprechend drehangetrieben, wodurch über die Schnecke 38 und das Getriebezahnrad 8 die Kurbelscheiben 9 verdreht werden. Im vorliegenden Fall erfolgt die Drehung in Fig. 1 um etwa 120° im Uhrzeigersinn. Durch diese Drehbewegung wird sowohl die Motor/Getriebeeinheit wie auch die bewegliche Platte 2 (in den Figuren) nach rechts verschoben. Durch die hohe Untersetzung wird das für den Verriegelungsvorgang erforderliche hohe Drehmoment erzeugt. Der sinusförmige Verlauf der Geschwindigkeits- bzw. Kraftkennlienen des Kurbeltriebs ermöglicht eine schnelle Fahrbewegung mit anschließendem Aufbau der Verriegelungskraft. Durch den Einsatz des Doppelkurbeltriebs ergeben sich bereits bei kleinen Kurbelauslenkungen große Wege und ermöglichen so eine kompakte und einfache Bauweise.

Wesentlich für den funktionssicheren, langjährigen Betrieb der Schließeinheit ist eine gute Schmierung der beweglichen Teile. Die konstruktive Umsetzung einer solchen Schmierung wird nachfolgend mit Bezug auf Fig. 8 beschrieben. Dieser Gegenstand ist jedoch nicht Teil der vorliegenden Erfindung.

Jedes Pleuel 11' und 11" ist vorliegend identisch aufgebaut, was zur Reduktion der unterschiedlichen Bauteile beiträgt. An ihren beiden Enden weisen die Pleuel 11' und 11" jeweils eine Bohrung auf. Im eingebauten Zustand, der in einer Teilschnittdarstellung in Fig. 8 gezeigt ist, werden in diese Pleuelbohrungen Lagerbuchsen 17 eingesetzt, vorzugsweise im Presssitz. Seitlich der Lagerbuchsen sind jeweils Dichtringe 13 vorgesehen, die zwischen den Bolzen 24', 24" bzw. 10 und den Lagerbolzen 17 einen geringen Ringspalt 16 für das Schmiermittel definieren. Über eine Zuführbohrung 15 wird ein Schmiermittel mittels einer Elektromotor-/Pumpenanordnung 19 und einer entsprechend angeschlossenen Leitung in den ersten Ringspalt 16 eingeführt. Dieses Schmiermittel wird durch geeignete Mittel wie Rillen etc. im gesamten Ringraum 16 gleichmäßig verteilt. Die beiden Ringräume 16 eines jeweiligen Pleuels 11' oder 11" sind über einen Strömungskanal 12 miteinander verbunden, so dass das Schmiermittel von einem zum anderen Ringraum 16 eines Pleuels geführt werden kann. Überdies gibt es beim Ringraum des Bolzens 10 einen Abflusskanal 18, der das Schmiermittel aus diesem Ringraum abführt. Der Abflusskanal 18 mündet über einem im Bolzen 10 ausgebildeten Kanal in das Innere des Gehäuses 40 des Kurbeltriebs und füllt dieses zumindest teilweise. Damit laufen auch das Zahnrad 8 sowie die Antriebsschnecke 38 in diesem Schmiermittel. Aus dem Gehäuse 40 wird das Schmiermittel über einen Auslass abgeführt und kann über die Elektromotor-/Pumpenanordnung 19 wieder dem Zulauf 15 zugeführt werden.

Jeder der Pleuel 11' und 11" ist auf diese Weise gleich ausgebildet, so dass beim Betrieb der Schließeinheit in jedem Pleuel 11', 11" folgender Schmiermittelumlauf durchgeführt wird: Das Schmiermittel wird über die Elektromotor-/Pumpenanordnung 19 über dem Zulauf 15 einem ersten Ringraum 16 zugeführt, verteilt sich in diesem Ringraum 16, wird über den Strömungskanal 12 an den zweiten Ringraum 16 weitergegeben. Aus dem zweiten Ringraum 16 wird es über den Abflusskanal 18 in den Innenraum des Gehäuses 40 abgegeben und von Elektromotor-/Pumpenanofdnung 19 wieder dem Zulauf 15 zugeführt. Für diese Schmierung benötigt man lediglich eine Elektromotor/Pumpenkombination mit kleiner Antriebsleistung, um die Schwenklager an jedem Pleuel ständig mit Schmiermittel zu versorgen. Überdies läuft der Schneckenradsatz im ölgefüllten Getriebegehäuse. Überdies ist der Antriebssatz durch die Ringdichtungen 13 gekapselt und mit lenkfreien Gelenken versehen, so dass auch eine Reinraumtauglichkeit der Schließeinrichtung gewährleistet ist.

Natürlich kann die vorliegende Erfindung auch in Abweichung vom vorliegenden Ausführungsbeispiel realisiert werden. Beispielsweise können anstatt der zwei Kurbelscheiben 9 eine oder auch mehrere Kurbelscheiben verwendet werden. In gleicher Weise können auch ein oder mehrere Pleuel erster bzw. zweiter Art verwendet werden. Auch gibt es eine Vielzahl von Antriebsmöglichkeiten für die Kurbelscheiben. Bei der vorliegenden Ausführungsform wäre es beispielsweise möglich, zwei Elektromotoren vorzusehen, um zum einen die Antriebslast auf das Zahnrad 8 besser zu verteilen. Zum anderen könnten die Motoren kleiner ausgeführt werden. Es sind jedoch auch alternative Antriebskonzepte für die Kurbelscheiben möglich.

### Bezugszeichenliste

- 1: Feste Aufspannplatte
- 2: Bewegliche Aufspannplatte
- 2': Lager- und Befestigungsbock der beweglichen Aufspannplatte
- 3: (Verstellbar) Abstützplatte
- 4: (Doppel-) Kurbeltrieb
- 5: Lager- und Führungsschienen
- 6: Zugholme
- 7: Spindelmutter
- 7': Zentrales Zahnrad
- 8: Zahnrad zwischen den Kurbelscheiben
- 9: Kurbelscheibe
- 10: Kurbelbolzen
- 11', 11": Pleuel
- 12: Strömungskanal
- 13: Ringdichtung
- 13': Kugellager
- 14: Lager für Antriebsschnecke
- 15: Zufuhrkanal
- 16: Ringspalt
- 17: Lagerbuchse
- 18: Abfuhrkanal
- 19: Elektromotor-/Pumpe Kombination
- 22: Lagerbock für Kurbelantrieb
- 24': Befestigungsbolzen
- 24": Befestigungsbolzen
- 32: Motor
- 32': Motorabtriebswelle
- 34, 34': Schlitten
- 38: Antriebsschnecke
- 40: Gehäuse
- 45: Zugholmgewinde

## Patentansprüche

1. Schließeinheit für eine Spritzgießmaschine umfassend eine feste Aufspannplatte (1), eine Abstützplatte (3) und eine zwischen der festen Aufspannplatte (1) und der Abstützplatte (3) hin und her bewegbar angeordnete bewegliche Aufspannplatte (2), wobei
- die bewegliche Aufspannplatte (2) unter Zwischenschaltung eines Öffnungs- und Schließmechanismus (4) zum Auf- und Zubewegen gegen die Abstützplatte (3) abgestützt ist,
- zwischen der Abstützplatte (3) und der festen Aufspannplatte (1) zumindest ein Zugmittel (6) vorgesehen ist, um einen Schließkraftaufbau zwischen der festen (1) und der beweglichen (2) Platte zu ermöglichen,
- der Öffnungs- und Schließmechanismus als Kurbeltrieb (4) mit zumindest einer Kurbelscheibe (9) ausgebildet ist, welche mittels eines Antriebs (32) drehangetrieben und über zumindest ein Pleuel (11') erster Art mit der Abstützplatte (3) und über zumindest ein Pleuel (11") zweiter Art mit der beweglichen Platte (2) verbunden ist, wobei zumindest ein Pleuel einer Art (11', 11") exzentrisch an der drehangetriebenen Kurbelscheibe (9) angelenkt ist,
**dadurch gekennzeichnet,**
**dass** der Öffnungs- und Schließmechanismus (4) auch als Antrieb zum Schließkraftaufbau dient und die Konstruktion des Kurbeltriebs (4) sowie der Antrieb zum Aufbringen der Schließkraft ausgelegt sind, wobei die Schließkraft in einer Totpunktlage des Kurbeltriebs (4) aufgebracht wird.

2. Schließeinheit nach Anspruch 1,
**dadurch gekennzeichnet, dass**
dass die Pleuel sowohl erster wie auch zweiter Art (11', 11") exzentrisch, insbesondere mit gleicher Exzentrizität und diametral gegenüberliegend an der Kurbelscheibe (9) angelenkt sind.

3. Schließeinheit nach Anspruch 1 oder 2,
**dadurch gekennzeichnet, dass**
die Pleuel (11', 11") derart an der zumindest einen Kurbelscheibe (9) angeordnet und angelenkt sind, dass bezüglich der Geschlossenstellung der beweglichen und festen Aufspannplatten (1, 2) eine Verdrehung der Kurbelscheibe (9) um ca. 120° möglich ist.

4. Schließeinheit nach einem der vorhergehenden Ansprüche,
**dadurch gekennzeichnet, dass**
zwei parallel nebeneinander angeordnete Kurbelscheiben (9) vorgesehen sind, die verdrehfest gegeneinander verbunden und jeweils mit Pleuel erster (11') und zweiter (11") Art mit der Abstützplatte (3) und der beweglichen Platte (2) verbunden sind.

5. Schließeinheit nach Anspruch 4,
**dadurch gekennzeichnet, dass**
zwischen den beiden Kurbelscheiben (9) ein Zahnrad (8) angeordnet ist, welches mit beiden Kurbelscheiben (9) verbunden ist und mit einem Antriebsmittel (32, 32', 38) in Eingriff steht.

6. Schließeinheit nach Anspruch 5,
**dadurch gekennzeichnet,**
**dass** das Antriebsmittel regelbar ausgebildet ist.

7. Schließeinheit nach einem der vorhergehenden Ansprüche,
**dadurch gekennzeichnet, dass**
die Kurbelscheiben (9) in einem Gehäuse (40) gelagert sind.

8. Schließeinheit nach einem der vorhergehenden Ansprüche,
**dadurch gekennzeichnet, dass**
dass als Antriebseinheit ein zumindest ein Elektromotor (32) oder zumindest ein Hydromotor vorgesehen ist, der jeweils mit einem Ritzel oder einer Antriebsschnecke (38) mit dem Zahnrad (8) in Eingriff steht.

9. Schließeinheit nach einem der vorhergehenden Ansprüche,
**dadurch gekennzeichnet, dass**
die bewegliche Aufspannplatte (2) auf zumindest einer Führungsschiene (5) hin und her bewegbar angeordnet ist.

10. Schließeinheit nach einem der vorhergehenden Ansprüche,
**dadurch gekennzeichnet, dass**
der Kurbeltrieb (4) sowie die Antriebseinrichtung (32) auf einem gemeinsamen Lagerbock (22) gehalten sind, der auf zumindest einer Führungsschiene (5) in Öffnungs- und Schließrichtung hin und her bewegbar ist.

11. Schließeinheit nach einem der vorhergehenden Ansprüche,
**dadurch gekennzeichnet, dass**
dass als Zugmittel zumindest 2, vorzugsweise 4 Zugholme (6) vorgesehen sind.

12. Schließeinheit nach einem der vorhergehenden Ansprüche,
**dadurch gekennzeichnet, dass**
eine weitere Antriebseinrichtung (7, 7') vorgesehen ist, mit der die Abstützplatte (3) gegenüber der festen Aufspannplatte (1) verstellbar ist.

13. Schließeinheit nach Anspruch 12,
**dadurch gekennzeichnet, dass**
für jeden Zugholm (6) eine drehangetriebene Verstellmutter (7) vorgesehen ist, die mit einem Gewinde eines jeweiligen Zugholm (6) zum Verstellen der Abstützplatte (3) gegenüber der festen Aufspannplatte (1) zusammenwirkt.

## Claims

1. A locking unit for an injection moulding machine comprising a fixed clamping platen (1), a support platen (3), and a moving clamping platen (2) arranged so that it can be moved back and forth between the fixed clamping platen (1) and the support platen (3), wherein
- the moving clamping platen (2) is supported against the support platen (3) by interposing an opening and closing mechanism (4) for back and forth movement,
- at least one tensioning means (6) is provided between the support platen (3) and the fixed clamping platen (1) to permit the build-up of a locking force between the fixed (1) and the moving platen (2),
- the opening and closing mechanism is configured as a crank drive (4) with at least one crank disk (9) which is rotationally driven by means of at least one drive (32) and is connected to the support platen (3) by at least one connecting rod (11') of a first type and is connected to the moving platen (2) by at least one connecting rod (11") of a second type, wherein at least one connecting rod of one type (11', 11") is eccentrically articulated to the rotationally driven crank disk (9),
**characterised in that** the opening and closing mechanism (4) serves as the drive for the build-up of locking force and the construction of the crank drive (4) as well as the drive are designed for application of the locking force, wherein the locking force is applied at a dead point position of the crank drive (4).

2. The locking unit according to claim 1, **characterised in that** the connecting rods of the first and the second type (11', 11") are eccentrically articulated to, in particular having the same eccentricity and diametrically opposite to, the crank disk (9).

3. The locking unit according to claim 1 or 2, **characterised in that** the connecting rods (11', 11") are arranged and articulated to the at least one crank disk (9) in such a manner that the crank disk (9) can be twisted by about 120° with respect to the closed position of the moving and fixed clamping platens (1, 2).

4. The locking unit according to any one of the preceding claims, **characterised in that** there are provided two crank disks (9) arranged parallel and adjacent to one another, which are connected rotationally fixedly to one another and are respectively connected by connecting rods of the first type (11') to the support platen (3) and by connecting rods of the second type (11") to the moving platen (2).

5. The locking unit according to claim 4, **characterised in that** a gear (8) is disposed between the two crank disks (9), said gear being connected to the two crank disks (9) and being in engagement with a drive means (32, 32', 38).

6. The locking unit according to claim 5, **characterised in that** the drive means are configured as controllable.

7. The locking unit according to any one of the preceding claims, **characterised in that** the crank disks (9) are mounted in a housing (40).

8. The locking unit according to any one of the preceding claims, **characterised in that** at least one electric motor (32) or at least one hydraulic motor is provided as the drive unit, each entering into engagement with the gear (8) by means of a pinion or a driving screw (38).

9. The locking unit according to any one of the preceding claims, **characterised in that** the moving clamping platen (2) is arranged so that it can move back and forth on at least one guide rail (5).

10. The locking unit according to any one of the preceding claims, **characterised in that** the crank drive (4) as well as the drive device (32) are held on a common bearing block (22) which can be moved back and forth into the opening and closing position on at least one guide rail (5).

11. The locking unit according to any one of the preceding claims, **characterised in that** at least two, preferably four tie rods (6) are provided as tensioning means.

12. The locking unit according to any one of the preceding claims, **characterised in that** a further drive device (7, 7') is provided whereby the support platen (3) can be adjusted in relation to the fixed clamping platen (1).

13. The locking unit according to claim 12, **characterised in that** a rotationally driven adjusting nut (7) is provided for each tie rod (6), said adjusting not cooperating with a thread of the respective tie rod (6) to adjust the support platen (3) in relation to the fixed clamping platen (1).

## Revendications

1. Unité de fermeture pour machine de moulage par injection, comprenant une plaque de montage fixe (1), une plaque d'appui (3) et une plaque de montage mobile (2) disposée de manière à être mobile en va et vient entre la plaque de montage fixe (1) et la plaque d'appui (3), dans laquelle
- la plaque de montage mobile (2) s'appuie avec interposition d'un mécanisme d'ouverture et de fermeture (4) pour la lever et l'approcher contre la plaque d'appui (3),
- il est prévu entre la plaque d'appui (3) et la plaque de montage fixe (1) au moins un moyen de traction (6) pour permettre une formation de force de fermeture entre la plaque fixe (1) et la plaque mobile (2),
- le mécanisme d'ouverture et de fermeture (4) est réalisé sous forme d'une commande à manivelle (4) comportant au moins un flasque de manivelle (9) qui est entraîné en rotation au moyen d'une commande (32) et est raccordé par au moins une bielle (11') de premier type à la plaque d'appui (3) et par au moins une bielle (11") de deuxième type à la plaque mobile (2), au moins une bielle d'un type (11', 11") s'articulant excentriquement au flasque de manivelle (9) entraîné en rotation,
**caractérisée en ce que**
le mécanisme d'ouverture et de fermeture (4) sert aussi de commande pour la formation de la force de fermeture et que la structure de la commande à manivelle (4) ainsi que la commande sont conçues pour l'application de la force de fermeture, la force de fermeture étant appliquée dans une position de point mort de la commande à manivelle (4).

2. Unité de fermeture selon la revendication 1,
**caractérisée en ce que**
les bielles de premier aussi bien que de deuxième type (11', 11'') s'articulent excentriquement, notamment avec la même excentricité, et en étant diamétralement opposées sur le flasque de manivelle (9).

3. Unité de fermeture selon la revendication 1 ou 2,
**caractérisée en ce que**
les bielles (11', 11") sont disposées et s'articulent sur l'au moins un flasque de manivelle (9) de manière à ce qu'au niveau de la position fermée des plaques de montage mobile et fixe (1, 2), une rotation d'environ 120° du flasque de manivelle (9) soit possible.

4. Unité de fermeture selon une des revendications précédentes,
**caractérisée en ce que**
il est prévu deux flasques de manivelle (9) juxtaposés qui sont raccordés de manière fixe en rotation l'un contre l'autre et sont raccordés respectivement par la bielle de premier type (11') et de deuxième type (11'') à la plaque d'appui (3) et à la plaque mobile (2).

5. Unité de fermeture selon la revendication 4,
**caractérisée en ce que**,
entre les deux flasques de manivelle (9), est disposée une roue dentée (8) qui est raccordée aux deux flasques de manivelle (9) et s'engrène dans un moyen moteur (32, 32', 38).

6. Unité de fermeture selon la revendication 5,
**caractérisée en ce que**
le moyen moteur est de type réglable.

7. Unité de fermeture selon une des revendications précédentes,
**caractérisée en ce que**
les flasques de manivelle (9) s'appuient dans un boîtier (40).

8. Unité de fermeture selon une des revendications précédentes,
**caractérisée en ce que**
il est prévu comme unité motrice au moins un moteur électrique (32) ou au moins un moteur hydraulique qui s'engrène respectivement par un pignon ou une vis motrice (38) dans la roue dentée (8).

9. Unité de fermeture selon une des revendications précédentes,
**caractérisée en ce que**
la plaque de montage mobile (2) est disposée de manière à être mobile en va et vient sur au moins un rail de guidage (5).

10. Unité de fermeture selon une des revendications précédentes,
**caractérisée en ce que**
la commande à manivelle (4) ainsi que le dispositif moteur (32) sont maintenus sur une chaise de palier commune (22) qui est mobile en va et vient sur au moins un rail de guidage (5) vers la position d'ouverture et de fermeture.

11. Unité de fermeture selon une des revendications précédentes,
**caractérisée en ce que**
il est prévu comme moyens de traction au moins 2, de préférence 4, traverses de traction (6).

12. Unité de fermeture selon une des revendications précédentes,
**caractérisée en ce que**
il est prévu un autre dispositif moteur (7, 7') permettant de régler la plaque d'appui (3) par rapport à la plaque de montage fixe (1).

13. Unité de fermeture selon la revendication 12,
**caractérisée en ce que**
il est prévu pour chaque traverse de traction (6) un écrou de réglage entraîné en rotation (7) qui coopère avec un filetage d'une traverse de traction respective (6) pour régler la plaque d'appui (3) par rapport à la plaque de montage fixe (1).
